# EUROPÄISCHE PATENTANMELDUNG

(11) **EP 3 570 497 A1**
(43) Veröffentlichungstag der Anmeldung: **20.11.2019**
(21) Anmeldenummer: 19169710.1
(22) Anmeldetag: 17.04.2019
(51) Int. Cl.: H04L 12/28, H04W 60/00

(54) **HAUSHALTSGERÄT**

(30) Priorität: 17.05.2018 DE 102018111844
(71) Anmelder: Miele & Cie. KG, 33332 Gütersloh (DE)
(72) Erfinder: Langhammer, Nils, 33415 Verl (DE)

(57) **Zusammenfassung**

Die Erfindung betrifft ein Haushaltsgerät (10) mit einer Steuerungseinrichtung (12), welche dazu eingerichtet ist, den Betrieb des Haushaltsgeräts (10) zu steuern, und einer Kamera (14), welche dazu eingerichtet ist, ein optisches Muster (M) zu erfassen und der Steuerungseinrichtung (12) das erfasste optische Muster (M) bereitzustellen, wobei die Steuerungseinrichtung (12) dazu eingerichtet ist, Verbindungsinformationen zum Herstellen einer Verbindung mit einem oder mehreren externen Geräten (102, 108, 110) aus dem von der Kamera (14) bereitgestellten optischen Muster (M) auszulesen und mittels der ausgelesenen Verbindungsinformationen eine Verbindung mit dem einen oder den mehreren externen Geräten (102, 108, 110) herzustellen.

## Beschreibung

Die Erfindung betrifft ein Haushaltsgerät mit einer Steuerungseinrichtung, welche dazu eingerichtet ist, den Betrieb des Haushaltsgeräts zu steuern, und einer Kamera, welche dazu eingerichtet ist, ein optisches Muster zu erfassen und der Steuerungseinrichtung das erfasste optische Muster bereitzustellen.

Ferner betrifft die Erfindung ein Kommunikationssystem mit einem Haushaltsgerät und einem mobilen Endgerät, welches eine Recheneinheit zum Erzeugen eines optischen Musters und eine Anzeigeeinrichtung zur Anzeige des optischen Musters umfasst, wobei das optische Muster Verbindungsinformationen zum Herstellen einer Verbindung zwischen dem Haushaltsgerät und einem oder mehreren externen Geräten umfasst.

Darüber hinaus betrifft die Erfindung ein Verfahren zum Herstellen einer Verbindung zwischen einem Haushaltsgerät und einem oder mehreren externen Geräten, mit den Schritten: Erzeugen und Anzeigen eines optischen Musters durch ein mobiles Endgerät, wobei das optische Muster Verbindungsinformationen zum Herstellen einer Verbindung zwischen einem Haushaltsgerät und einem oder mehreren externen Geräten umfasst, und Erfassen des durch das mobile Endgerät angezeigten optischen Musters durch eine Kamera eines Haushaltsgeräts. Moderne Haushaltsgeräte können in lokale Drahtlosnetzwerke eingebunden werden, sodass die Haushaltsgeräte über das jeweilige lokale Drahtlosnetzwerk eine Internetverbindung herstellen und/oder mit anderen Geräten kommunizieren können.

Über das lokale Drahtlosnetzwerk ist es möglich, einzelne Funktionen des Haushaltsgeräts anderen externen Geräten bereitzustellen. Beispielsweise kann die Kamerafunktion eines als Saugroboter ausgebildeten Haushaltsgeräts auf diese Weise einem mobilen Endgerät bereitgestellt werden, wodurch das durch das Haushaltsgerät aufgezeichnete Bild auf dem mobilen Endgerät wiedergegeben werden kann.

Durch die Internetverbindung können ferner Informationen, welche beispielsweise den Benutzer des Haushaltsgeräts bei der Benutzung des Haushaltsgeräts unterstützen, aus dem Internet heruntergeladen werden. Ferner erlaubt die Internetverbindung einen Fernzugriff auf das Haushaltsgerät, sodass das Haushaltsgerät aus der Ferne überwachbar und/oder steuerbar ist.

Damit derartige Funktionen von Haushaltsgeräten genutzt werden können, ist die Einbindung des Haushaltsgeräts in ein entsprechendes Drahtlosnetzwerk notwendig. Zum Schutz der Kommunikation externer Geräte mit dem Haushaltsgerät sind außerdem regelmäßig Schlüssel notwendig, welche dem Haushaltsgerät im Zuge der Einrichtung entsprechend bereitzustellen sind.

Zur Einrichtung von Haushaltsgeräten sind im Stand der Technik unterschiedliche Lösungen bekannt. Bei der Einrichtung von Haushaltsgeräten ist die Verwendung des standardisierten WPS-Protokolls und die Verwendung eines sogenannten Soft-Access-Points zur Bereitstellung von Daten für das Haushaltsgerät gebräuchlich. Für den Austausch von Schlüsselinformationen werden häufig Protokolle, wie zum Beispiel das Diffie-Hellman-Protokoll eingesetzt, mit welchen eine Klartextübertragung der Schlüsselinformationen verhindert wird. Derartige Übertragungslösungen sind jedoch mittels sogenannter Man-in-the-Middle-Attacken angreifbar. Die Verwendung des WPS-Protokolls oder die Benutzung eines Soft-Access-Points erfolgt üblicherweise unter Verwendung einer Anwendung eines mobilen Endgeräts und wird vom Benutzer häufig als kompliziert und fehleranfällig wahrgenommen.
Die der Erfindung zugrundeliegende Aufgabe besteht somit darin, die Einrichtung von Haushaltsgeräten zu vereinfachen.

Die Aufgabe wird gelöst durch ein Haushaltsgerät der eingangs genannten Art, wobei die Steuerungseinrichtung des erfindungsgemäßen Haushaltsgeräts dazu eingerichtet ist, Verbindungsinformationen zum Herstellen einer Verbindung mit einem oder mehreren externen Geräten aus dem von der Kamera bereitgestellten optischen Muster auszulesen und mittels der ausgelesenen Verbindungsinformationen eine Verbindung mit dem einen oder den mehreren externen Geräten herzustellen.

Die Erfindung macht sich die Erkenntnis zunutze, dass dem Haushaltsgerät entsprechende Verbindungsinformationen auch ohne die Nutzung von Datenübertragungstechnologien bereitstellbar sind, wenn das Haushaltsgerät dazu geeignet ist, optische Muster auszuwerten bzw. auszulesen. Ferner wird die Sicherheit beim Einrichten des Haushaltsgeräts gesteigert, da die Bereitstellung des optischen Musters für die Kamera des Haushaltsgeräts in unmittelbarer Nähe des Haushaltsgeräts zu erfolgen hat. Außerdem kommt es zu einer erheblichen Vereinfachung des Einrichtungsprozesses, da keine zeitaufwendigen und komplexen Einstellungen zum Senden von Einrichtungsinformationen mittels einer bekannten Datenübertragungstechnologie notwendig sind. Zur Einrichtung des Haushaltsgeräts ist lediglich die Erzeugung eines optischen Musters notwendig, welches von dem Haushaltsgerät ausgelesen werden kann. Das optische Muster kann beispielsweise durch ein mobiles Endgerät des Benutzers des Haushaltsgeräts erzeugt werden, insbesondere über eine entsprechende Anwendung, welche auf dem mobilen Endgerät installiert ist. Alternativ oder zusätzlich können entsprechende optische Muster auch an Computern oder Laptops erzeugt werden, beispielsweise über den Aufruf einer Konfigurationsplattform des Herstellers des Haushaltsgeräts, sodass die erzeugten optischen Muster anschließend ausgedruckt und in gedruckter Form der Kamera des Haushaltsgeräts bereitgestellt werden können.

Das optische Muster kann beispielsweise ein zweidimensionaler Code, wie etwa ein QR-Code oder ein Strich- bzw. Balkencode sein. Ferner kann das optische Muster auch ein zeitlich veränderlicher Code sein. Alternativ oder zusätzlich kann das optische Muster auch eine Farbcodierung umfassen.

Beispielsweise kann das optische Muster durch ein als Mobilfunkgerät oder Tablet ausgebildetes mobiles Endgerät erzeugt und durch eine optische Anzeigeeinrichtung des mobilen Endgeräts der Kamera des Haushaltsgeräts angezeigt werden.

In einer bevorzugten Ausführungsform des erfindungsgemäßen Haushaltsgeräts ist die Steuerungseinrichtung dazu eingerichtet, in den ausgelesenen Verbindungsinformationen Autorisierungsinformationen zur Anmeldung des Haushaltsgeräts in einem Drahtlosnetzwerk zu erfassen und mittels der erfassten Autorisierungsinformationen eine Anmeldung in dem Drahtlosnetzwerk auszuführen. Insbesondere können die Autorisierungsinformationen Identifikationsinformationen für das Drahtlosnetzwerk umfassen. Entsprechende Identifikationsinformationen für das Drahtlosnetzwerk können beispielsweise eine Netzwerkbezeichnung oder die Bezeichnung eines Netzwerkgeräts umfassen, über welches das Haushaltsgerät in dem Drahtlosnetzwerk angemeldet werden kann. Die Autorisierungsinformationen können alternativ oder zusätzlich Anmeldedaten für das Haushaltsgerät umfassen. Entsprechende Anmeldedaten können beispielsweise einen Benutzernamen und/oder ein Passwort für das Haushaltsgerät umfassen, mit welchen das Haushaltsgerät die Anmeldung in dem Drahtlosnetzwerk ausführen kann.

Darüber hinaus ist ein erfindungsgemäßes Haushaltsgerät bevorzugt, bei welchem die Steuerungseinrichtung dazu eingerichtet ist, in den ausgelesenen Verbindungsinformationen Verschlüsselungsinformationen zum Entschlüsseln und/oder Verschlüsseln von Daten zu erfassen und die erfassten Verschlüsselungsinformationen bei der Kommunikation mit einem oder mehreren externen Geräten zu verwenden. Über die Verwendung entsprechender Verschlüsselungsinformationen bei der Kommunikation mit einem oder mehreren externen Geräten kann eine geschützte Kommunikationsverbindung zwischen dem Haushaltsgerät und dem einen oder den mehreren Geräten umgesetzt werden. Durch die dem Haushaltsgerät bereitgestellten Verschlüsselungsinformationen kann die Klartextübertragung vermieden werden, wodurch die übertragenen Daten wirksam vor unbefugtem Zugriff geschützt werden.

In einer Weiterbildung des erfindungsgemäßen Haushaltsgeräts ist die Steuerungseinrichtung dazu eingerichtet, einen Einrichtungsmodus an dem Haushaltsgerät einzustellen, bei welchem ein in dem Erfassungsbereich der Kamera befindliches und die Verbindungsinformation umfassendes optisches Muster selbsttätig erfasst und ausgelesen wird. Vorzugsweise ist die Steuerungseinrichtung dazu eingerichtet, in dem Einrichtungsmodus des Haushaltsgeräts auch selbsttätig die Verbindung mit einem oder mehreren externen Geräten herzustellen, selbsttätig die Anmeldung an dem Drahtlosnetzwerk auszuführen und/oder selbsttätig die ausgelesenen Verschlüsselungsinformationen bei der Kommunikation mit einem oder mehreren externen Geräten zu verwenden.

Außerdem ist ein erfindungsgemäßes Haushaltsgerät vorteilhaft, bei welchem die Steuerungseinrichtung dazu eingerichtet ist, den Einrichtungsmodus bei Betätigung einer Bedieneinrichtung des Haushaltsgeräts und/oder beim Einschalten des Haushaltsgeräts einzustellen. Die Bedieneinrichtung des Haushaltsgeräts kann beispielsweise eine druck- und/oder berührungssensitive Betätigungseinrichtung, wie etwa ein Knopf oder eine Taste sein. Alternativ oder zusätzlich kann die Bedieneinrichtung auch als Touchscreen des Haushaltsgeräts ausgebildet sein. Vorzugsweise ist die Steuerungseinrichtung dazu eingerichtet, beim Einschalten des Haushaltsgeräts zu erfassen, ob eine entsprechende Einrichtung des Haushaltsgeräts bereits erfolgt ist. Wenn noch keine entsprechende Einrichtung des Haushaltsgeräts erfolgt ist, kann die Steuerungseinrichtung die selbsttätige Einstellung des Einrichtungsmodus des Haushaltsgeräts veranlassen. Wenn bereits eine entsprechende Einrichtung des Haushaltsgeräts erfolgt ist, kann die Steuerungseinrichtung das Einstellen des Einrichtungsmodus unterdrücken, sodass der Benutzungskomfort des Haushaltsgeräts nach erfolgter Einrichtung des Haushaltsgeräts weiter gesteigert wird.

Darüber hinaus kann die Steuerungseinrichtung des erfindungsgemäßen Haushaltsgeräts dazu eingerichtet sein, nach dem Auslesen der Verbindungsinformationen aus dem optischen Muster und/oder nach dem Herstellen einer Verbindung mit einem oder mehreren externen Geräten unter Verwendung der ausgelesenen Verbindungsinformationen einen optischen und/oder akustischen Hinweis auszugeben, welcher den Benutzer über die erfolgreiche Durchführung des Einrichtungsvorgangs informiert. Analog kann die Steuerungseinrichtung des erfindungsgemäßen Haushaltsgeräts dazu eingerichtet sein, einen optischen und/oder akustischen Hinweis auszugeben, wenn das Auslesen der Verbindungsinformationen aus dem optischen Muster und/oder das Herstellen einer Verbindung mit einem oder mehreren externen Geräten nicht möglich ist, sodass der Benutzer über die gescheiterte Durchführung des Einrichtungsvorgangs informiert wird.

Das Haushaltsgerät kann beispielsweise als Saugroboter ausgebildet sein. Alternativ oder zusätzlich kann das Haushaltsgerät als Kühl- und/oder Gefriergerät ausgebildet sein. Ferner kann das Haushaltsgerät als Gargerät ausgebildet sein. Darüber hinaus kann das Haushaltsgerät als Backofen ausgebildet sein. In einer weiteren Ausführungsform ist das Haushaltsgerät als Mikrowelle ausgebildet. Alternativ kann das Haushaltsgerät auch als Dampfgarer ausgebildet sein. Das Haushaltsgerät kann auch als Geschirrspüler ausgebildet sein.

Die der Erfindung zugrundeliegende Aufgabe wird ferner durch ein Kommunikationssystem der eingangs genannten Art gelöst, wobei das Haushaltsgerät des erfindungsgemäßen Kommunikationssystems nach einem der vorstehenden Ansprüche ausgebildet ist. Hinsichtlich der Vorteile und Modifikationen des erfindungsgemäßen Kommunikationssystems wird zunächst auf die Vorteile und Modifikationen des erfindungsgemäßen Haushaltsgeräts verwiesen.

Das mobile Endgerät kann beispielsweise als portables Mobilfunkgerät oder als Tablet ausgebildet sein. Die Anzeigeeinrichtung des mobilen Endgeräts ist vorzugsweise als Display oder Touchscreen ausgebildet.

In einer besonders bevorzugten Ausführungsform des erfindungsgemäßen Kommunikationssystems ist auf dem mobilen Endgerät eine Anwendung installiert, mittels welcher die Verbindungsinformationen, welche das zu erzeugende optische Muster umfasst, zumindest teilweise definierbar ist. Vorzugsweise stellt die Anwendung dem Benutzer des mobilen Endgeräts eine Bedienoberfläche bereit, über welche Autorisierungsinformationen zur Anmeldung des Haushaltsgeräts in einem Drahtlosnetzwerk und/oder Verschlüsselungsinformationen, welche das Haushaltsgerät zum Entschlüsseln und/oder Verschlüsseln von Daten befähigen, definierbar und/oder auswählbar sind.

In einer anderen Ausführungsform umfasst das erfindungsgemäße Kommunikationssystem ein Netzwerkgerät, über welches das Haushaltsgerät mit in den Verbindungsinformationen erfassten Autorisierungsinformationen in einem Drahtlosnetzwerk angemeldet ist. Das Drahtlosnetzwerk ist vorzugsweise ein lokales Drahtlosnetzwerk, wobei das Netzwerkgerät vorzugsweise als Router ausgebildet ist und/oder ein Modem umfasst, über welches dem Drahtlosnetzwerk eine Internetverbindung bereitgestellt wird. Darüber hinaus kann das erfindungsgemäße Kommunikationssystem ein oder mehrere externe Geräte umfassen, welche dazu eingerichtet sind, verschlüsselt mit anderen Geräten zu kommunizieren, wobei das Haushaltsgerät dazu eingerichtet ist, unter Verwendung von in den Verbindungsinformationen erfassten Verschlüsselungsinformationen mit dem einen oder den mehreren externen Geräten verschlüsselt zu kommunizieren. Ein externes Gerät kann dabei beispielsweise das mobile Endgerät sein, über welches dem Haushaltsgerät das optische Muster mit den Verbindungsinformationen bereitstellbar ist. Das eine oder die mehreren externen Geräte können sich ebenfalls in dem Drahtlosnetzwerk befinden. Ferner kann das eine oder können die mehreren externen Geräte auch netzwerkexterne Geräte sein, mit welchen das Haushaltsgerät über eine Internetverbindung kommuniziert, insbesondere verschlüsselt kommuniziert.

Die der Erfindung zugrundeliegende Aufgabe wird ferner durch ein Verfahren der eingangs genannten Art gelöst, wobei das Verfahren das Auslesen der Verbindungsinformationen aus dem optischen Muster durch das Haushaltsgerät und das Herstellen einer Verbindung zwischen dem Haushaltsgerät und einem oder mehreren externen Geräten unter Verwendung der ausgelesenen Verbindungsinformationen umfasst.

In einer bevorzugten Ausführungsform des erfindungsgemäßen Verfahrens wird dieses mit einem Haushaltsgerät nach einer der vorstehend beschriebenen Ausführungsformen oder einem Kommunikationssystem nach einer der vorstehend beschriebenen Ausführungsformen ausgeführt. Hinsichtlich der weiteren Vorteile und Modifikationen des erfindungsgemäßen Verfahrens wird auf die Vorteile und Modifikationen des erfindungsgemäßen Haushaltsgeräts bzw. die Vorteile und Modifikationen des erfindungsgemäßen Kommunikationssystems verwiesen.

Nachfolgend wird eine bevorzugte Ausführungsform der Erfindung unter Bezugnahme auf die beiliegende Zeichnung näher erläutert und beschrieben. Dabei zeigt:

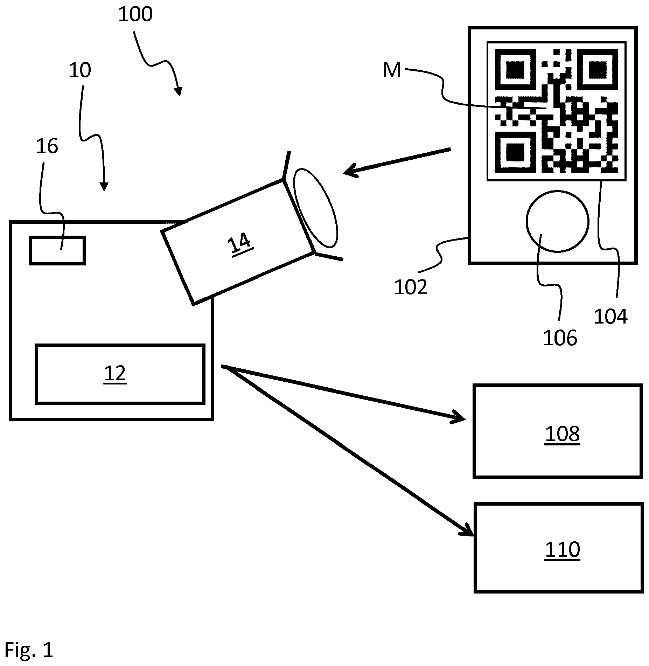

- Fig. 1: ein Ausführungsbeispiel eines erfindungsgemäßen Kommunikationssystems in einer schematischen Darstellung.

Gemäß Fig. 1 umfasst das Kommunikationssystem 100 ein Haushaltsgerät 10 und mehrere externe Geräte 102, 108, 110.

Das Haushaltsgerät 10 ist als Saugroboter ausgebildet. In einer alternativen Ausführungsform kann das Haushaltsgerät jedoch auch als Kühl- und/oder Gefriergerät, Gargerät, Backofen, Geschirrspüler oder Mikrowelle ausgebildet sein.

Das Haushaltsgerät 10 weist eine Steuerungseinrichtung 12, eine Kamera 14 und eine Bedieneinrichtung 16 auf. Mittels der Steuerungseinrichtung 12 wird der Betrieb des Haushaltsgeräts 10 gesteuert. Die Kamera 14 ist mit der Steuerungseinrichtung 12 signalübertragend verbunden und dazu geeignet, ein optisches Muster M zu erfassen. Die Kamera 14 stellt das optische Muster M nach der Erfassung der Steuerungseinrichtung 12 bereit. Die Bedieneinrichtung 16 ist ebenfalls signalübertragend mit der Steuerungseinrichtung 12 verbunden und als drucksensitive Taste ausgebildet.

Die mehreren externen Geräte 102, 108, 110 umfassen ein als portables Mobilfunkgerät ausgebildetes mobiles Endgerät 102, ein als Router ausgebildetes Netzwerkgerät 108 und ein weiteres externes Gerät 110.

Das mobile Endgerät 102 weist eine Recheneinheit zum Erzeugen eines optischen Musters M und eine als Display ausgebildete Anzeigeeinrichtung 104 zur Anzeige des optischen Musters M auf. Ferner umfasst das mobile Endgerät 102 ein oder mehrere Bedienelemente 106, über welche ein Benutzer das mobile Endgerät 102 bedienen kann. Das Netzwerkgerät 108 stellt ein lokales Drahtlosnetzwerk bereit und erlaubt Geräten die Anmeldung in dem bereitgestellten lokalen Drahtlosnetzwerk. Das weitere externe Gerät 110 kann beispielsweise ein entfernter Zentralrechner sein, über welchen das Haushaltsgerät aus der Ferne, insbesondere über das Internet, überwachbar und/oder steuerbar ist. Die Geräte 102, 108, 110 sind dazu eingerichtet, drahtlos und verschlüsselt mit anderen Geräten zu kommunizieren.

Zur Einrichtung des Haushaltsgeräts 10 sind dem Haushaltsgerät 10 von einem Benutzer Verbindungsinformationen bereitzustellen, welche es dem Haushaltsgerät 10 erlauben, eine Verbindung zum Austausch von Daten mit den externen Geräten 102, 108, 110 herzustellen.

Im Rahmen des Einrichtungsvorgangs definiert ein Benutzer über eine Anwendung, welche auf dem mobilen Endgerät installiert ist, Verbindungsinformationen für das Haushaltsgerät 10. Die Verbindungsinformationen für das Haushaltsgerät 10 umfassen Autorisierungsinformationen, mit welchen sich das Haushaltsgerät 10 über das Netzwerkgerät 108 in dem Drahtlosnetzwerk anmelden kann. Ferner umfassen die Verbindungsinformationen für das Haushaltsgerät 10 Verschlüsselungsinformationen, mit welchen das Haushaltsgerät verschlüsselt mit den Geräten 102, 108, 110 kommunizieren kann.

Zur Bereitstellung der Verbindungsinformationen für das Haushaltsgerät 10 erzeugt das mobile Endgerät 104 ein optisches Muster M, welches die Verbindungsinformationen enthält. Das die Verbindungsinformationen enthaltende optische Muster M ist ein OR-Code, welcher von der Anzeigeeinrichtung 104 des mobilen Endgeräts 102 angezeigt wird. Das optische Muster M ist dann von einem Benutzer in dem Erfassungsbereich der Kamera 14 des Haushaltsgeräts 10 zu positionieren, sodass das Haushaltsgerät 10 das angezeigte optische Muster M durch die Kamera 14 erfassen kann.

Die Steuerungseinrichtung 12 des Haushaltsgeräts 10 ist dazu eingerichtet, bei Betätigung der Bedieneinrichtung 16 des Haushaltsgeräts 10 durch einen Benutzer und/oder beim Einschalten des Haushaltsgeräts 10 durch einen Benutzer einen Einrichtungsmodus einzustellen. In dem Einrichtungsmodus des Haushaltsgeräts 10 wird ein in dem Erfassungsbereich der Kamera 14 des Haushaltsgeräts 10 befindliches und die Verbindungsinformationen umfassendes optisches Muster M selbsttätig erfasst und ausgelesen.

Durch das Auslesen des optischen Musters M werden die Verbindungsinformationen in dem optischen Muster M decodiert. Die Steuerungseinrichtung 12 des Haushaltsgeräts 10 ist dazu eingerichtet, die ausgelesenen Verbindungsinformationen zu nutzen, um selbsttätig eine Verbindung mit den Geräten 102, 108, 110 herzustellen.

Außerdem ist Steuerungseinrichtung 12 dazu eingerichtet, die Autorisierungsinformationen zur Anmeldung des Haushaltsgeräts 10 in dem Drahtlosnetzwerk in den ausgelesenen Verbindungsinformationen zu erfassen und mittels der erfassten Autorisierungsinformationen selbsttätig eine Anmeldung in dem Drahtlosnetzwerk auszuführen. Die ausgelesenen Autorisierungsinformationen umfassen dabei eine Bezeichnung des lokalen Drahtlosnetzwerks, welches von dem Netzwerkgerät 108 bereitgestellt wird, sowie ein für die Anmeldung in dem lokalen Drahtlosnetzwerk notwendiges Passwort.

Darüber hinaus ist die Steuerungseinrichtung 12 dazu eingerichtet, die Verschlüsselungsinformationen zum Entschlüsseln und Verschlüsseln von Daten in den ausgelesenen Verbindungsinformationen zu erfassen und die erfassten Verschlüsselungsinformationen bei der Kommunikation mit den Geräten 102, 108, 110 zu verwenden, sodass eine geschützte Kommunikationsverbindung zwischen dem Haushaltsgerät 10 und den Geräten 102, 108, 110 umgesetzt wird.

### Bezugszeichenliste

- 10: Haushaltsgerät
- 12: Steuerungseinrichtung
- 14: Kamera
- 16: Bedieneinrichtung

- 100: Kommunikationssystem
- 102: mobiles Endgerät
- 104: Anzeigeeinrichtung
- 106: Bedienelement
- 108: Netzwerkgerät
- 110: externes Gerät

- M: optisches Muster

## Patentansprüche

1. Haushaltsgerät (10), mit
- einer Steuerungseinrichtung (12), welche dazu eingerichtet ist, den Betrieb des Haushaltsgeräts (10) zu steuern; und
- einer Kamera (14), welche dazu eingerichtet ist, ein optisches Muster (M) zu erfassen und der Steuerungseinrichtung (12) das erfasste optische Muster (M) bereitzustellen;
**dadurch gekennzeichnet, dass** die Steuerungseinrichtung (12) dazu eingerichtet ist, Verbindungsinformationen zum Herstellen einer Verbindung mit einem oder mehreren externen Geräten (102, 108, 110) aus dem von der Kamera (14) bereitgestellten optischen Muster (M) auszulesen und mittels der ausgelesenen Verbindungsinformationen eine Verbindung mit dem einen oder den mehreren externen Geräten (102, 108, 110) herzustellen.

2. Haushaltsgerät (10) nach Anspruch 1,
**dadurch gekennzeichnet, dass** die Steuerungseinrichtung (12) dazu eingerichtet ist, in den ausgelesenen Verbindungsinformationen Autorisierungsinformationen zur Anmeldung des Haushaltsgeräts (10) in einem Drahtlosnetzwerk zu erfassen und mittels der erfassten Autorisierungsinformationen eine Anmeldung in dem Drahtlosnetzwerk auszuführen.

3. Haushaltsgerät (10) nach Anspruch 1 oder 2,
**dadurch gekennzeichnet, dass** die Steuerungseinrichtung (12) dazu eingerichtet ist, in den ausgelesenen Verbindungsinformationen Verschlüsselungsinformationen zum Entschlüsseln und/oder Verschlüsseln von Daten zu erfassen und die erfassten Verschlüsselungsinformationen bei der Kommunikation mit einem oder mehreren externen Geräten (102, 108, 110) zu verwenden.

4. Haushaltsgerät (10) nach einem der vorstehenden Ansprüche,
**dadurch gekennzeichnet, dass** die Steuerungseinrichtung (12) dazu eingerichtet ist, einen Einrichtungsmodus an dem Haushaltsgerät (10) einzustellen, bei welchem ein in dem Erfassungsbereich der Kamera (14) befindliches und die Verbindungsinformationen umfassendes optisches Muster (M) selbsttätig erfasst und ausgelesen wird.

5. Haushaltsgerät (10) nach Anspruch 4,
**dadurch gekennzeichnet, dass** die Steuerungseinrichtung (12) dazu eingerichtet ist, den Einrichtungsmodus bei Betätigung einer Bedieneinrichtung (16) des Haushaltsgeräts (10) und/oder beim Einschalten des Haushaltsgeräts (10) einzustellen.

6. Kommunikationssystem (100), mit
- einem Haushaltsgerät (10), und
- einem mobilen Endgerät (102), welches eine Recheneinheit zum Erzeugen eines optischen Musters (M) und eine Anzeigeeinrichtung (104) zur Anzeige des optischen Musters (M) umfasst, wobei das optische Muster (M) Verbindungsinformationen zum Herstellen einer Verbindung zwischen dem Haushaltsgerät (10) und einem oder mehreren externen Geräten (102, 108, 110) umfasst;
**dadurch gekennzeichnet, dass** das Haushaltsgerät (10) nach einem der vorstehenden Ansprüche ausgebildet ist.

7. Kommunikationssystem (100) nach Anspruch 6,
**dadurch gekennzeichnet, dass** auf dem mobilen Endgerät (102) eine Anwendung installiert ist, mittels welcher die Verbindungsinformationen, welche das zu erzeugende optische Muster (M) umfasst, zumindest teilweise definierbar sind.

8. Kommunikationssystem (100) nach Anspruch 6 oder 7, ferner umfassend:
- ein Netzwerkgerät (108), über welches das Haushaltsgerät (10) mit in den Verbindungsinformationen erfassten Autorisierungsinformationen in einem Drahtlosnetzwerk angemeldet ist; und/oder
- ein oder mehrere externe Geräte (102, 108, 110), welche dazu eingerichtet sind, verschlüsselt mit anderen Geräten zu kommunizieren, wobei das Haushaltsgerät (10) dazu eingerichtet ist, unter Verwendung von in den Verbindungsinformationen erfassten Verschlüsselungsinformationen mit dem einen oder den mehreren externen Geräten (102, 108, 110) verschlüsselt zu kommunizieren.

9. Verfahren zum Herstellen einer Verbindung zwischen einem Haushaltsgerät (10) und einem oder mehreren externen Geräten (102, 108, 110), mit den Schritten:
- Erzeugen und Anzeigen eines optischen Musters (M) durch ein mobiles Endgerät (102), wobei das optische Muster (M) Verbindungsinformationen zum Herstellen einer Verbindung zwischen einem Haushaltsgerät (10) und einem oder mehreren externen Geräten (102, 108, 110) umfasst; und
- Erfassen des durch das mobile Endgerät (102) angezeigten optischen Musters (M) durch eine Kamera (14) eines Haushaltsgeräts (10);
**gekennzeichnet, durch** die Schritte:
- Auslesen der Verbindungsinformationen aus dem optischen Muster (M) durch das Haushaltsgerät (10); und
- Herstellen einer Verbindung zwischen dem Haushaltsgerät (10) und einem oder mehreren externen Geräten (102, 108, 110) unter Verwendung der ausgelesenen Verbindungsinformationen.

10. Verfahren nach Anspruch 9,
**dadurch gekennzeichnet, dass** das Verfahren mit einem Haushaltsgerät (10) nach einem der Ansprüche 1 bis 5 oder einem Kommunikationssystem (100) nach einem der Ansprüche 6 bis 8 ausgeführt führt.
